# EUROPÄISCHE PATENTSCHRIFT

(11) **EP 1 305 195 B1**
(45) Veröffentlichungstag und Bekanntmachung des Hinweises auf die Patenterteilung: **07.07.2004**
(21) Anmeldenummer: 01953916.2
(22) Anmeldetag: 19.07.2001
(51) Int. Cl.: B60T 8/40

(54) **Hydraulische Fahrzeugbremsanlage**
Hydraulic vehicle braking system
Système de freinage hydraulique pour véhicule

(30) Priorität: 20.07.2000 DE 10035218
(43) Veröffentlichungstag der Anmeldung: 02.05.2003
(73) Patentinhaber: ROBERT BOSCH GMBH, 70442 Stuttgart (DE)
(72) Erfinder: SIEGEL, Heinz, 70435 Stuttgart (DE)
(86) Internationale Anmeldenummer: PCT/DE2001/002628
(87) Internationale Veröffentlichungsnummer: WO 2002/008036

(56) Entgegenhaltungen:
- WO-A-00/05114
- WO-A-96/16853
- WO-A-97/12790
- WO-A-98/28174
- WO-A-99/52756
- DE-A- 3 627 264
- PATENT ABSTRACTS OF JAPAN vol. 2000, no. 02, 29. Februar 2000 (2000-02-29) & JP 11 303819 A (KOMATSU LTD), 2. November 1999 (1999-11-02)

## Beschreibung

### Stand der Technik

Die Erfindung betrifft eine hydraulische Fahrzeugbremsanlage mit den Merkmalen des Oberbegriffs des Anspruchs 1.

Aus der WO 98/28174 ist eine hydraulische Fahrzeugbremsanlage bekannt, die eine hydraulische Fremdenergiequelle zur Durchführung einer Betriebsbremsung und einen durch Muskelkraft betätigbaren Hauptbremszylinder zur Durchführung einer Hilfsbremsung bei Störung der Fremdenergie-Betriebsbremsanlage aufweist. Die Fremdenergiequelle wirkt auf alle Radbremszylinder der Fahrzeugbremsanlage, wogegen der Hauptbremszylinder nur auf einen Teil der Radbremszylinder, nämlich auf Vorderachs-Radbremszylinder wirkt, die beim Bremsen eine größere Verzögerung als die anderen, Hinterachs-Radbremszylinder bewirken. Bei einer Betriebsbremsung dient der Hauptbremszylinder als Sollwertgeber für eine mit Radbremsen zu erzeugende Bremskraft, also für in den Radbremszylindern aufzubauende Radbremsdrücke. Eine Steuerung der Radbremsdrücke erfolgt bei der bekannten Fahrzeugbremsanlage in an sich bekannter Weise mit Bremsdruckventilanordnungen, wobei vorzugsweise jedem Radbremszylinder eine eigene Bremsdruckventilanordnung zugeordnet ist, so dass der Radbremsdruck an jeder Radbremse individuell steuerbar ist.

Die bekannte Fahrzeugbremsanlage weist für jeden der Hilfsbremsanlage zugeordneten Radbremszylinder eine Zylinder-Kolben-Anordnung als Trenneinrichtung auf, deren Kolben bei der Betriebsbremsung von der Fremdenergiequelle beaufschlagt wird. Der Kolben der Trenneinrichtung beaufschlagt seinerseits den zugeordneten Radbremszylinder. Bei der Hilfsbremsung beaufschlagt der Hauptbremszylinder die Radbremszylinder ohne Zwischenschaltung der Trenneinrichtung. Die Trenneinrichtung trennt für die an die Hilfsbremsanlage angeschlossenen Radbremszylinder die Bremsflüssigkeit von der Fremdenergiequelle von Bremsflüssigkeit des Hauptbremszylinders. Dies hat den Zweck, Gasblasen in der Bremsflüssigkeit der Hilfsbremsanlage zu vermeiden. Solche Gasblasen können beispielsweise aus einem der Fremdenergiequelle nachgeschalteten Druckspeicher in die Bremsflüssigkeit der Betriebsbremsanlage gelangen. Auch ist es möglich, dass die Fremdenergiequelle Luft ansaugt und auf diese Weise Gasblasen in die Bremsflüssigkeit der Betriebsbremsanlage gelangt. Der durch Muskelkraft betätigbare Hauptbremszylinder weist einen begrenzten Kolbenweg und damit ein begrenztes, verdrängbares Bremsflüssigkeitsvolumen auf. Da Gasblasen in der Bremsflüssigkeit zu einer Kompressibilität der Bremsflüssigkeit führen, mindern Gasblasen in der Bremsflüssigkeit der Hilfsbremsanlage deren Funktion erheblich oder setzen die Hilfsbremsanlage außer Betrieb. Gasblasen in der Hilfsbremsanlage sind deswegen zu vermeiden, weswegen in der bekannten Fahrzeugbremsanlage die Trenneinrichtungen an den an die Hilfsbremsanlage angeschlossenen Radbremszylindern vorgesehen sind.

Nachteil der Trenneinrichtungen ist, dass für jeden Radbremszylinder der Hilfsbremsanlage eine eigene Trenneinrichtung erforderlich ist. Die Fahrzeugbremsanlage wird dadurch aufwendig und teuer. Die Volumina der Trenneinrichtungen müssen fahrzeugspezifisch abgestimmt sind, weswegen für verschiedene Fahrzeuge unterschiedliche Trenneinrichtungen notwendig sind. Dies verteuert die Fahrzeugbremsanlage weiter und erfordert eine große Lagerhaltung. Des weiteren besteht die Gefahr, dass falsche Trenneinrichtungen in ein Fahrzeug eingebaut werden.

### Vorteile der Erfindung

Die erfindungsgemäße hydraulische Fahrzeugbremsanlage mit den Merkmalen des Anspruchs 1 vermeidet das Eintreten von Gasblasen aus der Bremsflüssigkeit der Fremdenergiequelle in die Bremsflüssigkeit der Hilfsbremsanlage bzw. in die das Fahrzeug stark verzögernden Radbremszylinder, also üblicherweise die Vorderachs-Radbremszylinder. Die erfindungsgemäße Fahrzeugbremsanlage weist einen der Fremdenergiequelle nachgeschalteten Gasabscheider mit Speicherkammer auf. Diese Speicherkammer weist in der Einbau- und Gebrauchslage einen hoch angeordneten Fluidanschluss und einen tief angeordneten Fluidanschluss auf. An den tief angeordneten Fluidanschluss sind die Radbremszylinder der Hilfsbremsanlage angeschlossen, an den hoch angeordneten Fluidanschluss sind die übrigen Radbremszylinder angeschlossen. Die Speicherkammer ist an die Fremdenergiequelle angeschlossen. Eventuell in die Speicherkammer eintretende Gasblasen steigen in der Speicherkammer nach oben oder bleiben oben und sammeln sich oben in der Speicherkammer. Die als Gasabscheider ausgebildete Speicherkammer vermeidet, dass Gasblasen zu dem tief angeordneten Fluidanschluss und damit in die an diesen Fluidanschluss angeschlossene Hilfsbremsanlage gelangen.

Die erfindungsgemäße hydraulische Fahrzeugbremsanlage hat somit den Vorteil, dass Gasblasen aus der Bremsflüssigkeit der Hilfsbremsanlage fern gehalten werden. Weiterer Vorteil ist, dass nur ein Gasabscheider mit Speicherkammer für die Fahrzeugbremsanlage notwendig ist. Außerdem lässt sich die Speicherkammer des Gasabscheiders mit einem für alle Fahrzeugtypen ausreichenden Volumen ausbilden, so dass keine unterschiedlichen Baugrößen der Speicherkammer notwendig sind. Zusätzlicher Vorteil des Gasabscheiders ist, dass dessen Speicherkammer zumindest in einzelnen Ausgestaltungen keine beweglichen Teile aufweist, so dass die Speicherkammer verschleiß- und störungsfrei ist. Der Gasabscheider ist einfach und preisgünstig und aus wenigen Einzelteilen herstellbar.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand in der Zeichnung dargestellter Ausführungsbeispiele näher erläutert. Es zeigen:
- Figur 1: einen hydraulischen Schaltplan einer erfindungsgemäßen Fahrzeugbremsanlage;
- Figur 2: einen Achsschnitt einer Speicherkammer und
- Figur 3: einen Achsschnitt eines zweiten Ausführungsbeispiels einer Speicherkammer.

### Beschreibung der Ausführungsbeispiele

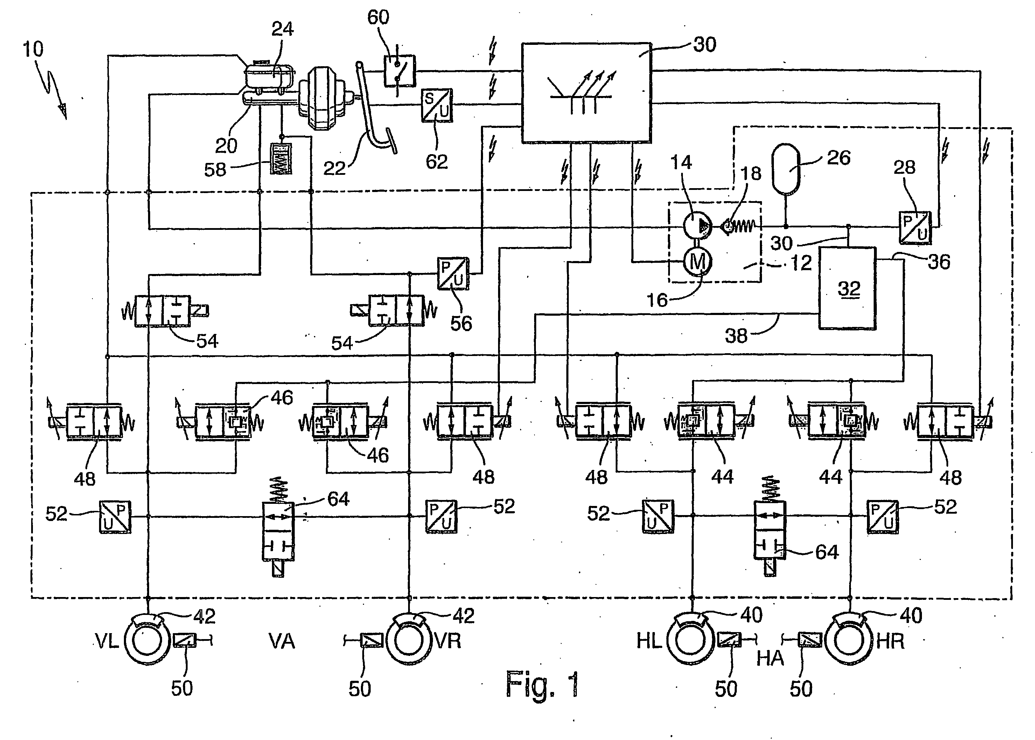

Die in Figur 1 dargestellte, erfindungsgemäße, hydraulische Fahrzeugbremsanlage 10 weist eine Fremdenergiequelle 12 auf, die eine Hydropumpe 14 umfasst, die mit einem Elektromotor 16 antreibbar ist. Der Hydropumpe 14 ist ein Rückschlagventil 18 nachgeschaltet, das ebenfalls der Fremdenergiequelle 12 zugeordnet wird. Die Fremdenergiequelle 12 dient zur Durchführung von Betriebsbremsungen, die Fahrzeugbremsanlage 10 lässt sich daher als elektrohydraulische Fahrzeugbremsanlage 10 bezeichnen.

Des weiteren weist die Fahrzeugbremsanlage 10 einen Hauptbremszylinder 20 auf, der mit einem Fußbremspedal 22, also durch Muskelkraft, betätigbar ist. Der Hauptbremszylinder 20 dient zur Durchführung von Hilfsbremsungen im Falle einer Störung der Betriebsbremsanlage. Im Falle der Betriebbremsung dient der Hauptbremszylinder 20 als Sollwertgeber für einen mit der Betriebsbremsanlage aufzubauenden Radbremsdruck. Der Radbremsdruck wird im Falle der Betriebsbremsung ausschließlich von der Fremdenergiequelle 12 erzeugt.

Die Hydropumpe 14 der Fremdenergiequelle 12 ist an einen Bremsflüssigkeits-Vorratsbehälter 24 des Hauptbremszylinders 20 angeschlossen. Der Fremdenergiequelle 12 ist ein Druckspeicher 26 nachgeschaltet, damit für eine Betriebsbremsung jederzeit unter Druck stehende Bremsflüssigkeit zur Verfügung steht. An den Hydrospeicher 26 ist ein Drucksensor 28 angeschlossen, der ein Signal an ein elektronisches Steuergerät 30 der erfindungsgemäßen Fahrzeugbremsanlage 10 liefert. Das Steuergerät 30 schaltet den Elektromotor 16 der Hydropumpe 14 ein, wenn ein Druck im Hydrospeicher 26 unter einen vorgegebenen, unteren Grenzwert fällt und schaltet den Elektromotor 16 wieder aus, wenn der Druck im Druckspeicher 26 einen vorgegeben, oberen Grenzwert erreicht.

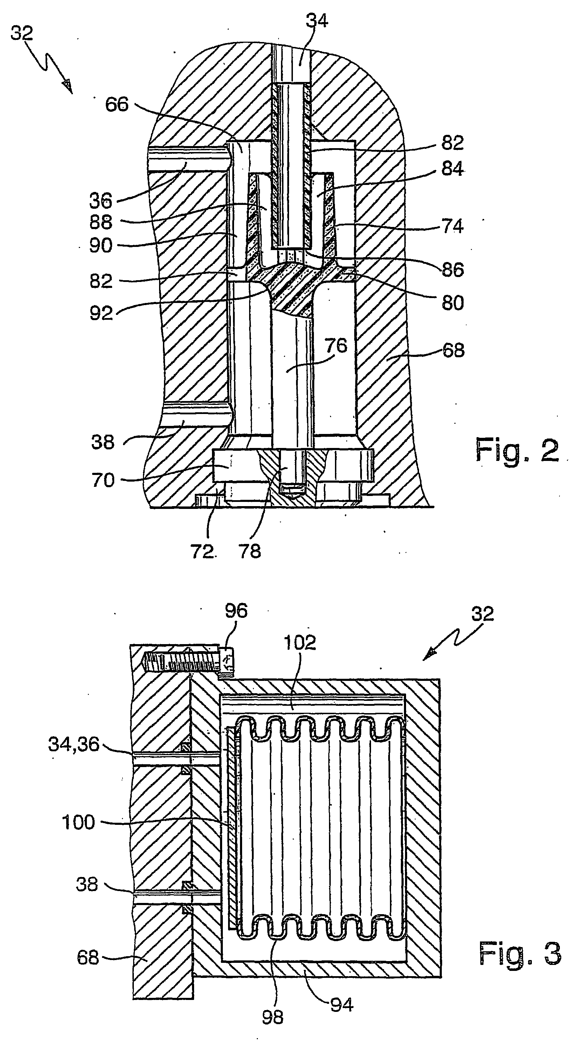

An die Fremdenergiequelle 12 ist eine Speicherkammer angeschlossen, die erfindungsgemäß als Gasabscheider 32 ausgebildet ist. Der Gasabscheider 32 weist eine Zuleitung 34 auf, mit der er an die Fremdenergiequelle 12 angeschlossen ist. Des weiteren weist der Gasabscheider 32 in seiner Gebrauchslage einen hoch angeordneten Fluidanschluss 36 und einen tief angeordneten Fluidanschluss 38 auf. An den hoch angeordneten Fluidanschluss 36 sind zwei Radbremszylinder 40 und an den tief angeordneten Fluidanschluss 38 sind zwei weitere Radbremszylinder 42 der erfindungsgemäßen Radbremsanlage 10 angeschlossen. Die Radbremszylinder 42, die an dem tief am Gasabscheider 32 angeordneten Fluidanschluss angeschlossen sind werden im Falle einer Hilfsbremsung mit dem Hauptbremszylinder 20 mit Druck beaufschlagt. Es sind Vorderachs-Radbremszylinder 42. Die Vorderachs-Radbremszylinder 42 bewirken auf Grund der Belastung der Vorderachse und der Entlastung der Hinterachse eines Fahrzeugs beim Bremsen die größere Verzögerung. Der Gasabscheider 32 vermeidet, dass Gasblasen, die u. U. aus der Hydropumpe 14 oder dem Druckspeicher 26 in die Bremsflüssigkeit gelangen, in den tief angeordneten Fluidanschluss 38 gelangen. Dadurch wird vermieden, dass Gasblasen in die Bremsflüssigkeit der Vorderachs-Radbremszylinder 42, d. h. in die Hilfsbremsanlage, gelangen. Aufbau und Funktion des erfindungsgemäßen Gasabscheiders 32 wird weiter unten anhand der Figuren 2 und 3 erläutert werden.

Die Hinterachs-Radbremszylinder 40 sind über Bremsdruckaufbauventile 44 an den hoch angeordneten Fluidanschluss 36 des Gasabscheiders 32 angeschlossen. Die Vorderachs-Radbremszylinder 42 sind über Druckaufbauventile 46 an den tief angeordneten Fluidanschluss 38 des Gasabscheiders 32 angeschlossen. Die Druckaufbauventile 44, 46 sind als in ihrer stromlosen Grundstellung geschlossene 2/2-Wege-Proportional-Magnetventile ausgebildet. Über Bremsdruckabsenkventile 48 sind die Radbremszylinder 40, 42 an eine gemeinsame Rückleitung angeschlossen, die zum Bremsflüssigkeit-Vorratsbehälter 24 des Hauptbremszylinders 20 führt. Die Druckabsenkventile 48 sind als in ihrer stromlosen Grundstellung offene 2/2-Wege-Proportional-Magnetventile ausgebildet. In die Druckaufbauventile 44, 46 sind Differenzdruckventile integriert, die die Aufgabe haben, einen Höchstdruck im Speicher bei z. B. Ausfall des Drucksensors 28 zu begrenzen. An sich ist ein Differenzdruckventil ausreichend, das in eines der Druckabsenkventile 48 integriert oder auch als separates Ventil vorgesehen sein kann. Im dargestellten Ausführungsbeispiel der Erfindung sind vier baugleiche Druckabsenkventile mit integrierten Differenzdruckventilen verwendet, weswegen vier Differenzdruckventile vorhanden sind. Die Druckaufbauventile 44, 46 und die Druckabsenkventile 48 werden vom elektronischen Steuergerät 30 gesteuert. Das einem Radbremszylinder 40, 42 zugeordnete Druckaufbauventil 44, 46 bildet zusammen mit dem diesem Radbremszylinder 40, 42 zugeordneten Druckabsenkventil 48 eine Bremsdruckventilanordnung 44, 46, 48, mit der ein Radbremsdruck im zugeordneten Radbremszylinder 40, 42 steuerbar ist. Zur Erhöhung des Radbremsdrucks wird das Druckaufbauventil 44, 46 geöffnet und das Druckabsenkventil 48 geschlossen. Zum Absenken des Radbremsdrucks im zugeordneten Radbremszylinder 40, 42 wird das Druckaufbauventil 44, 46 geschlossen und das Druckabsenkventil 48 geöffnet. Zum Konstanthalten des Radbremsdrucks in einem Radbremszylinder 40, 42 werden das ihm zugeordnete Druckaufbauventil 44, 46 und das ihm zugeordnete Druckabsenkventil 48 geschlossen. Dies ist an sich bekannt und soll an dieser Stelle nicht vertieft werden. Auch ist es. möglich, die beiden einem Radbremszylinder 40 zugeordneten Druckauf- und Druckabsenkventile 44, 46, 48 durch ein 3/3-Wege-Magnetventil zu ersetzen (nicht dargestellt). In ebenfalls an sich bekannter Weise ermöglichen die Bremsdruckventilanordnungen 44, 46, 48 eine radindividuelle Schlupfregelung zur Vermeidung des Blockierens eines Fahrzeugrades beim Bremsen und zur Vermeidung eines Durchdrehens eines angetriebenen Fahrzeugrades beim Beschleunigen (sog. Blockierschutzregelung und Antriebsschlupfregelung). Auch ist eine Stabilisierung des Fahrzeugs bei Kurvenfahrt durch gezieltes Bremsen eines oder mehrer Fahrzeugräder insbesondere mit dem Ziel, ein Schleudern des Fahrzeugs zu vermeiden, in an sich bekannter Weise mit den Bremsdruckventilanordnungen 44, 46, 48 möglich.

Zum Erkennen von Radschlupf oder durchdrehenden Fahrzeugrädern ist jedem Fahrzeugrad ein Raddrehsensor 50 zugeordnet, der ein Signal an das elektronische Steuergerät 30 liefert. Des weiteren ist an jeden Radbremszylinder 40, 42 ein Drucksensor 52 angeschlossen, um den Radbremsdruck messen und mit einem Sollwert vergleichen zu können.

Der Hauptbremszylinder 20 ist als Zweikreis-Hauptbremszylinder ausgeführt. An ihn sind unter Zwischenschaltung je eines Trennventils 54 die beiden Vorderachs-Radbremszylinder 42 angeschlossen. Die Trennventile 54 sind als in ihrer stromlosen Grundstellung offene 2/2-Wege-Magnetventile ausgebildet. Im Falle einer Betriebsbremsung, bei der die zum Bremsen notwendige Energie von der Fremdenergiequelle 12 zur Verfügung gestellt wird, werden die Trennventile 54 geschlossen, d. h. der Hauptbremszylinder 20 ist von den Radbremszylindern 40, 42 getrennt. Im Falle einer Störung der Betriebsbremsanlage, was anhand eines fehlenden oder unzureichenden Bremsdruckaufbaus mit dem an die Fremdenergiequelle 12 angeschlossenen Drucksensor 28 feststellbar ist, bleiben die Trennventile 54 geöffnet und es wird durch Niedertreten des Bremspedals 22 durch Muskelkraft mit dem Hauptbremszylinder 20 ein Bremsdruck in den Vorderachs-Radbremszylindern 42 aufgebaut. Es wird also eine Muskelkraft-Hilfsbremsung durchgeführt.

Bei störungsfreier Hauptbremsanlage dient der Hauptbremszylinder 20 als Bremsdruck-Sollwertgeber. An einen Kreis des Zweikreis-Hauptbremszylinders 20 ist ein Drucksensor 56 angeschlossen, mit dem ein durch Niedertreten des Fußbremspedals 22 im Hauptbremszylinder 20 aufgebauter Druck messbar ist, der als Sollwert für in den Radbremszylindern 40, 42 aufzubauende Radbremsdrücke dient. Dabei können die Radbremsdrücke in verschiedenen Radbremszylindern 40, 42 unterschiedlich sein und insbesondere vom Druck im Hauptbremszylinder 20 abweichen. Im Normalfall wird in den Vorderachs-Radbremszylindern 42 ein höherer Radbremsdruck als in den Hinterachs-Radbremszylindern 40 eingestellt werden.

Da bei einer Betriebsbremsung die Trennventile 54 geschlossen sind und deswegen keine Bremsflüssigkeit aus dem Hauptbremszylinder 20 in die Fahrzeugbremsanlage 10 verdrängt werden kann, ist ein Pedalwegsimulator 58 an einen Bremskreis des Hauptbremszylinders 20 angeschlossen. Der Pedalwegsimulator 58 ist als Zylinder-Kolben-Einheit mit einem federbeaufschlagten Kolben ausgebildet. Beim Niedertreten des Bremspedals 22 bei geschlossenen Trennventilen 54 wird Bremsflüssigkeit aus dem Hauptbremszylinder 20 in den Pedalwegsimulator 58 verdrängt, dessen Feder eine gewohnte Pedalkraft/Weg-Abhängigkeit bewirkt.

An das Bremspedal 22 ist ein sog. Bremslichtschalter 60 sowie ein Pedalwegsensor 62 angeschlossen. Mit dem Bremslichtschalter 60 ist feststellbar, ob das Bremspedal 22 niedergetreten ist, mit dem Pedalwegsensor 62 ist der Weg, um den das Bremspedal 22 niedergetreten ist, feststellbar. Der Pedalwegsensor 62 kann ebenfalls als Sollwertgeber für den in den Radbremszylindern 40, 42 einzustellenden Radbremsdruck verwendet werden, er ist redundant zu dem an den Hauptbremszylinder 20 angeschlossenen Drucksensor 56.

Die jeweils zwei Radbremszylinder 40, 42 einer Fahrzeugachse sind über ein Achsventil 64 miteinander verbunden. Das Achsventil 64 ist als in seiner stromlosen Grundstellung offenes 2/2-Wege-Magnetventil ausgebildet. Das Achsventil 64 bleibt beim Bremsen normalerweise geöffnet, d. h. in den Radbremszylindern 40, 42 einer Fahrzeugachse herrscht beim Bremsen der gleiche Radbremsdruck. Soll der Radbremsdruck in einem Radbremszylinder 40, 42 individuell gesteuert werden, wird das Achsventil 46 der entsprechenden Fahrzeugachse geschlossen und die Bremsdrucksteuerung erfolgt in bereits beschriebener Weise mit dem Druckaufbauventil 44, 46 und Druckabsenkventil 48, das dem betroffenen Radbremszylinder 40, 42 zugeordnet ist. Eine solche, radindividuelle Bremsdruckregelung ist beispielsweise bei auf einer linken und einer rechten Fahrzeugseite unterschiedlich griffigem Untergrund zur Blockierschutz- oder Antriebsschlupfregelung und auch zur Fahrdynamikregelung erforderlich.

Figur 2 zeigt eine Speicherkammer für eine hydraulische Fahrzeugbremsanlage. Die Speicherkammer ist erfindungsgemäß als Gasabscheider 32 ausgebildet. Der erfindungsgemäße Gasabscheider 32 ist als Sackbohrung 66 in einem Hydraulikblock 68 einer Fahrzeugbremsanlage ausgebildet. Im Hydraulikblock 68 sind weitere, in Figur 2 nicht dargestellte, hydraulische Bauelemente der Fahrzeugbremsanlage untergebracht und hydraulisch miteinander verschaltet. Bei den hydraulischen Bauelementen handelt es sich insbesondere um die Magnetventile 44, 46, 48, 54, 64, die Hydropumpe 14 mit ihrem Elektromotor 16 und die Drucksensoren 28, 52, 56 der erfindungsgemäßen Fahrzeugbremsanlage 10. Der klaren Darstellbarkeit wegen ist in Figur 2 lediglich ein den Gasabscheider 32 umgebendes Bruchstück des Hydraulikblocks 68 dargestellt, das zugleich ein Gehäuse des Gasabscheiders 32 bildet.

Die Sackbohrung 66 ist mit einem Verschlussdeckel 70 druckdicht verschlossen, der an einer Mündüngsseite in die Sackbohrung 66 eingesetzt und durch eine umlaufende Verstemmung 72 gehalten und druckfest abgedichtet ist. Die Fluidanschlüsse 36, 38 des Gasabscheiders 32, an die die Hinterachs-Radbremszylinder 40 und die Vorderachs-Radbremszylinder 42 angeschlossen sind, sind als Bohrungen im Hydraulikblock 68 ausgeführt, die radial in die Sackbohrung 66 münden. Dabei mündet der hoch angeordnete Fluidanschluss 36, an den die Hinterachs-Radbremszylinder 40 angeschlossen sind, oben in die Sackbohrung 66 und der unten angeordnete Fluidanschluss 38 an den die Vorderachs-Radbremszylinder 42 angeschlossen sind, mündet unten in die Sackbohrung 66. Oben und Unten bezieht sich auf eine Einbau- und Gebrauchslage des Gasabscheiders 32, wobei es wichtig ist, dass der tief angeordnete Fluidanschluss 38 mit einem ausreichenden Abstand von einem oberen Ende von der Sackbohrung 36 in diese mündet, der sicherstellt, dass eventuell in die Sackbohrung 36 eintretende Gasblasen nicht in den tief angeordneten Fluidanschluss 38 gelangen können.

In die Sackbohrung 66 ist ein nach oben offener Becher 74 eingesetzt, der aus Kunststoff hergestellt ist. Der Becher 74 weist eine Stütze 76 auf, die einen Zapfen 78 an ihrem Ende trägt, mit der sie in eine Sackbohrung im Verschlussdeckel 70 eingepresst ist. Auf diese Weise ist der Becher 74 in der Sackbohrung 66 befestigt. In einem Bereich eines Bodens des Bechers 74 steht ein umlaufender Bund radial ab, der an einer Wandung der Sackbohrung 66 anliegt und dadurch den Becher 74 koaxial in der Sackbohrung 66 hält. Der Bund bildet eine Zwischenwand 80, die den Gasabscheider 32 in einen oberen und einen unteren Teil unterteilt. Die Zwischenwand 80 ist mit Durchlässen 82 für die Bremsflüssigkeit versehen.

Der Gasabscheider 32 ist über einen dritten Fluidanschluss 34 an die Hydropumpe 14 der Fremdenergiequelle 12 der erfindungsgemäßen hydraulischen Fahrzeugbremsanlage 10 angeschlossen. Der dritte Anschluss 34 ist als Bohrung im Hydraulikblock 68 ausgebildet, die koaxial von oben in die Sackbohrung 66 mündet. In die den dritten Fluidanschluss 34 bildende Bohrung ist ein Rohrstück 82 eingepresst, das bis nahe an den Boden des Bechers 74 in diesen eintaucht. Von einer Wandung des Bechers 74 stehen vier in Längsrichtung verlaufende Rippen 84 radial nach innen ab. Über die Rippen 84 stützen sich der Becher 74 und das Rohrstück 82 in radialer Richtung an einander ab. Die Rippen 84 weisen Stufen 86 auf, auf denen das Rohrstück 82 mit seinem dem Boden des Bechers 74 zugewandten Stirnrand aufsitzt. Zwischen den Rippen 84 im Innern des Bechers 74, einer Wandung des Bechers 74 und dem Rohrstück 82 bestehen Zwischenräume, durch die Bremsflüssigkeit aus dem Rohrstück 82 in die Sackbohrung 66 und umgekehrt strömen kann. Diese Zwischenräume weisen eine große Querschnittsfläche auf, sie bilden eine Beruhigungsstrecke 88, in denen die Bremsflüssigkeit eine niedrige Strömungsgeschwindigkeit hat. Ebenso weist ein Zwischenraum zwischen der Wandung des Bechers 74 und der Sackbohrung 66 einen Zwischenraum mit großem Querschnitt auf, der ebenfalls eine Beruhigungsstrecke 90 mit geringer Strömungsgeschwindigkeit der Bremsflüssigkeit bildet.

Die Funktion der erfindungsgemäß als Gasabscheider 32 ausgebildeten Speicherkammer ist folgende: Eventuell aus der Hydropumpe 12 oder dem an sie angeschlossenen Druckspeicher 26 (Figur 1) durch den dritten Fluidanschluss 34 und das Rohrstück 82 in den Gasabscheider 32 eintretende Luftblasen steigen in der Sackbohrung 66 nach oben und sammeln sich an deren oberem Ende. Luftblasen werden dadurch von dem tief angeordnetem Fluidanschluss 38 ferngehalten. Es wird dadurch vermieden, dass solche Luftblasen in die der Hilfsbremsanlage zugeordneten Vorderachs-Radbremszylinder 42 der erfindungsgemäßen Fahrzeugbremsanlage 10 gelangen, die an den tief angeordneten Fluidanschluss 38 angeschlossen sind. Durch die in den Beruhigungsstrecken 88, 90 herabgesetzte Strömungsgeschwindigkeit der Bremsflüssigkeit wird vermieden, dass die Bremsflüssigkeit Luftblasen in der Sackbohrung 66 nach unten bis in den Bereich des tief angeordneten Fluidanschlusses 38 mitreißt.

Im Bereich seines Bodens ist der Becher 74 auf seiner dem Verschlussdeckel 70 zugewandten Außen- und Unterseite mit einer Rundung 92 ausgebildet. Dies bezweckt, dass Luftblasen, die in den unteren Bereich der Sackbohrung 66 gelangen, aufsteigen können und sich am obern Ende der Sackbohrung 66 sammeln. Der Gasabscheider 32 ist so ausgebildet, dass er keine nach unten gerichteten Flächen unterhalb des oberen Endes der Sackbohrung 66 aufweist, an denen sich Luftblasen sammeln könnten.

Figur 3 zeigt ein zweites Ausführungsbeispiel einer erfindungsgemäß als Gasabscheider 32 ausgebildeten Speicherkammer. Die Speicherkammer weist ein hohlzylindrisches Gehäuse 94 auf, das mit Schrauben 96 an eine Seitenfläche eines Hydraulikblock 68 einer hydraulischen Fahrzeugbremsanlage angeschraubt ist. In das Gehäuse 94 ist ein Metall-Faltenbalg 98 eingesetzt, der mit einem Verschlussdeckel 100 verschlossen ist. Im Faltenbalg 98 ist somit ein Gaspolster eingeschlossen. Bei der Speicherkammer handelt es sich somit um einen gasdruckbeaufschlagten Hydrospeicher. Der Faltenbalg 98 bildet ein bewegliches Trennelement des Gasabscheiders 32, der einen Innenraum des Gehäuses 94 in ein veränderliches, den Faltenbalg 98 umgebendes Speichervolumen 102 sowie das im Faltenbalg 98 eingeschlossene Gasvolumen teilt. Zum Anschluss des Gasabscheiders 32 an die Fahrzeugbremsanlage 10 sind zwei Bohrungen im Hydraulikblock 68 angebracht, die sich durch eine Wand des Gehäuses 94 des Gasabscheiders 32 fortsetzen und in dessen veränderliches Speichervolumen 102 münden. Die Bohrungen sind in einer Einbau- und Gebrauchslage des Gasabscheiders 32 übereinander angebracht. Die höher angebrachte Bohrung bildet den hoch angeordneten Fluidanschluss 36, an den die Hinterachs-Radbremszylinder, 40 der Fahrzeugbremsanlage 10 angeschlossen sind. Die tiefere Bohrung bildet den tief angeordneten Fluidanschluss 38, an den die Vorderachs-Radbremszylinder 42 angeschlossen sind. Der hoch angeordnete Fluidanschluss 36 bildet zugleich den dritten Fluidanschluss 34, durch den der Gasabscheider 32 an die Hydropumpe 14 angeschlossen ist. Die Funktion des in Figur 3 dargestellten Gasabscheiders 32 ist im Prinzip gleich wie die Funktion des in Figur 2 dargestellten Gasabscheiders 32. in den in Figur 3 dargestellten, erfindungsgemäßen Gasabscheider 32 eventuell aus der Hydropumpe 14 oder dem Druckspeicher 26 eintretende Luftblasen steigen im Speichervolumen 102 nach oben, wodurch vermieden wird, dass Luftblasen in den tief angeordneten Fluidanschluss 38 und damit in die den Vorderachs-Radbremszylindern 42 zuströmende Bremsflüssigkeit gelangt.

## Patentansprüche

1. Hydraulische Fahrzeugbremsanlage (10) mit mindestens zwei Radzylindem (40, 42), die zur Durchführung einer Betriebsbremsung von einer hydraulischen Fremdenergiequelle (12) beaufschlagt sind und mit einem durch Muskelkraft betätigbaren Hauptbremszylinder (20), mit dem zur Durchführung einer Hilfsbremsung mindestens einer der Radbremszylinder (42) beaufschlagbar ist, **dadurch gekennzeichnet, dass** die Fahrzeugbremsanlage einen Gasabscheider (32) aufweist, der der Fremdenergiequelle nachgeschaltet ist, dass der Gasabscheider (32) eine Speicherkammer für Hydraulikflüssigkeit mit einem ersten Fluidanschluss (36) für mindestens einen Radbremszylinder (40) und einem zweiten Fluidanschluss (38) für mindestens einen anderen Radbremszylinder (42) aufweist, dass in der Gebrauchslage des Gasabscheiders (32) der erste Fluidanschluss (36) höher als der zweite Fluidanschluss (38) angeordnet ist und dass der Hauptbremszylinder (20) auf den/die Radbremszylinder (42) wirkt, dessen/deren Fluidanschluss (38) tiefer am Gasabscheider (32) angeordnet ist.

2. Hydraulische Fahrzeugbremsanlage nach Anspruch 1, **dadurch gekennzeichnet, dass** der durch Muskelkraft betätigbare Hauptbremszylinder (20) nicht auf alle Bremskreise wirkt.

3. Hydraulische Bremsanlage nach Anspruch 1 oder 2, **dadurch gekennzeichnet, dass** die Speicherkammer ein veränderliches Speichervolumen (102) aufweist.

4. Hydraulische Fahrzeugbremsanlage nach Anspruch 3, **dadurch gekennzeichnet, dass** die Speicherkammer ein bewegliches Trennelement (98) aufweist, das die Speicherkammer in das Speichervolumen (102) und ein davon getrenntes Volumen teilt.

5. Hydraulische Fahrzeugbremsanlage nach Anspruch 4, **dadurch gekennzeichnet, dass** das Trennelement ein Faltenbalg (98) ist.

6. Hydraulische Fahrzeugbremsanlage nach Anspruch 1 oder 2, **dadurch gekennzeichnet, dass** die Speicherkammer einen dritten Fluidanschluss (34) aufweist.

7. Hydraulische Fahrzeugbremsanlage nach Anspruch 1 oder 2, **dadurch gekennzeichnet, dass** die Speicherkammer eine Beruhigungsstrecke (88, 90) mit großem Strömungsquerschnitt zwischen dem ersten Fluidanschluss (36) und dem zweiten Fluidanschluss (38) aufweist.

8. Hydraulische Fahrzeugbremsanlage nach Anspruch 6 und 7, **dadurch gekennzeichnet, dass** in der Speicherkammer ein in der Gebrauchslage des Gasabscheiders oben offener Becher (74) angeordnet ist, in den der dritte Fluidanschluss (34, 82) mündet.

9. Hydraulische Fahrzeugbremsanlage nach Anspruch 1 oder 2, **dadurch gekennzeichnet dass** in der Speicherkammer eine Zwischenwand (80) angeordnet ist, die mindestens einen Fluiddurchlass (82) aufweist und die in der Gebrauchslage des Gasabscheiders (32) die Speicherkammer in einen oberen und einen unteren Teil unterteilt, die durch den Fluiddurchlass (82) miteinander kommunizieren, wobei der erste Fluidanschluss (36) in den oberen und der zweite Fluidanschluss (38) in den unteren Teil mündet

10. Hydraulische Bremsanlage nach Anspruch 1 oder 2, **dadurch gekennzeichnet, dass** in der Gebrauchslage des Gasabscheiders (32) unterhalb des Fluidanschlusses (36) befindliche Flächen (92) der Speicherkammer schräg nach oben verlaufend so ausgebildet sind, dass Gasblasen an ihnen entlang nach oben in Richtung des ersten Fluidanschlusses (36) aufsteigen können.

## Claims

1. Hydraulic vehicle brake system (10), with at least two wheel cylinders (40, 42) which are acted upon by a hydraulic external energy source (12) for the execution of service braking, and with a brake master cylinder (20) which is actuable by muscular power and by means of which at least one of the wheel brake cylinders (42) can be acted upon for the execution of auxiliary braking, **characterized in that** the vehicle brake system has a gas separator (32) which follows the external energy source, **in that** the gas separator (32) has a storage chamber for hydraulic fluid, with a first fluid connection (36) for at least one wheel brake cylinder (40) and a second fluid connection (38) for at least one other wheel brake cylinder (42), **in that**, when the gas separator (32) is in the position of use, the first fluid connection (36) is arranged at a higher level than the second fluid connection (38), and **in that** the brake master cylinder (20) acts on the wheel brake cylinder/wheel brake cylinders (42), the fluid connection (38) of which is arranged at a lower level at the gas separator (32).

2. Hydraulic vehicle brake system according to Claim 1, **characterized in that** the brake master cylinder (20) actuable by muscular power does not act on all the brake circuits.

3. Hydraulic brake system according to Claim 1 or 2, **characterized in that** the storage chamber has a variable storage volume (102).

4. Hydraulic vehicle brake system according to Claim 3, **characterized in that** the storage chamber has a movable parting element (98) which divides the storage chamber into the storage volume (102) and a volume separated from the latter.

5. Hydraulic vehicle brake system according to Claim 4, **characterized in that** the parting element is a concertina (98).

6. Hydraulic vehicle brake system according to Claim 1 or 2, **characterized in that** the storage chamber has a third fluid connection (34).

7. Hydraulic vehicle brake system according to Claim 1 or 2, **characterized in that** the storage chamber has a steadying zone (88, 90) with a large flow cross section between the first fluid connection (36) and the second fluid connection (38).

8. Hydraulic vehicle brake system according to Claims 6 and 7, **characterized in that** the storage chamber has arranged in it a bowl (74) which is open at the top when the gas separator is in the position of use and into which the third fluid connection (34, 82) issues.

9. Hydraulic vehicle brake system according to Claim 1 or 2, **characterized in that** the storage chamber has arranged in it an intermediate wall (80) which has at least one fluid passage (82) and which, when the gas separator (32) is in the position of use, subdivides the storage chamber into an upper and a lower part which communicate with one another by means of the fluid passage (82), the first fluid connection (36) issuing into the upper part and the second fluid connection (38) into the lower part.

10. Hydraulic brake system according to Claim 1 or 2, **characterized in that**, when the gas separator (32) is in the position of use, surfaces (92) of the storage chamber which are located below the fluid connection (36) are designed to run obliquely upwards in such a way that gas bubbles can rise upwards along them in the direction of the first fluid connection (36).

## Revendications

1. Installation de frein hydraulique de véhicule (10) comportant au moins deux cylindres de frein de roue (40, 42) alimentés par une source d'énergie extérieure (12), hydraulique, pour exécuter un freinage de fonctionnement et un maître-cylindre de frein (20) actionné par la force musculaire, permettant de solliciter au moins l'un des cylindres de frein de roue (42) pour effectuer un freinage de secours,
**caractérisée en ce qu'**elle
comporte un séparateur de gaz (32) en aval de la source d'énergie extérieure,
le séparateur de gaz (32) comporte une chambre de stockage pour du liquide hydraulique ayant un premier branchement de fluide (36) pour au moins un cylindre de frein de roue (40) et un second branchement de flùide (38) pour au moins un autre cylindre de frein de roue (42), et en position d'utilisation du séparateur de gaz (32), le premier branchement de fluide (36) est situé plus haut que le second branchement de fluide (38) et
le maître-cylindre de frein (20) agit sur le ou les cylindres de frein de roue (42) dont le ou les branchements de fluide (38) sont installés les plus bas sur le séparateur de gaz (32).

2. Installation de frein hydraulique de véhicule selon la revendication 1,
**caractérisée en ce que**
le maître-cylindre (20) actionné par la force musculaire n'agit pas sur tous les circuits de frein.

3. Installation de frein hydraulique de véhicule selon l'une des revendications 1 ou 2,
**caractérisée en ce que**
la chambre accumulatrice présente un volume d'accumulation variable (102).

4. Installation de frein hydraulique de véhicule selon la revendication 3,
**caractérisée en ce que**
la chambre accumulatrice comporte un élément séparateur (98), mobile, qui divise la chambre accumulatrice en un volume d'accumulation (102) et un volume séparé de celui-ci.

5. Installation de frein hydraulique de véhicule selon la revendication 4,
**caractérisée en ce que**
l'élément séparateur est un soufflet (98).

6. Installation de frein hydraulique de véhicule selon l'une des revendications 1 ou 2,
**caractérisée en ce que**
la chambre accumulatrice comporte un troisième branchement de fluide (34).

7. Installation de frein hydraulique de véhicule selon la revendication 1 ou 2,
**caractérisée en ce que**
la chambre accumulatrice comporte un parcours tranquillisateur (88, 90) de grande section d'écoulement entre le premier branchement de fluide (36) et le second branchement de fluide (38).

8. Installation de frein hydraulique de véhicule selon les revendications 6 et 7,
**caractérisée en ce que**
la chambre accumulatrice comporte un gobelet (74) ouvert au-dessus en position d'utilisation du séparateur de gaz, et dans lequel débouche le troisième branchement de fluide (34, 82).

9. Installation de frein hydraulique de véhicule selon la revendication 1 ou 2,
**caractérisée par**
une cloison (80) installée dans la chambre accumulatrice, cette cloison ayant au moins un passage de fluide (82) et elle subdivise la chambre accumulatrice en une partie supérieure et une partie inférieure lorsque le séparateur de gaz (32) est en position d'utilisation, ces deux parties communiquant par un passage de fluide (82) et
le premier branchement de fluide (36) débouche dans la partie supérieure et le second branchement de fluide (38) débouche dans la partie inférieure.

10. Installation de frein hydraulique de véhicule selon la revendication 1 ou 2,
**caractérisée en ce qu'**
en position d'utilisation du séparateur de gaz (32), la surface (92) de la chambre accumulatrice qui se trouve en dessous du branchement de fluide (36) est inclinée vers le haut et les bulles de gaz peuvent glisser en remontant le long de cette surface en direction du premier branchement de fluide (36).
